# EUROPEAN PATENT SPECIFICATION

(11) **EP 4 267 484 B1**
(45) Date of publication and mention of the grant of the patent: **30.10.2024**
(21) Application number: 21830708.0
(22) Date of filing: 08.12.2021
(51) Int. Cl.: B65D 65/42, D21H 19/56, D21H 19/82, D21H 27/10

(54) **A METHOD FOR PRODUCING A HEAT SEALABLE MULTI-LAYER PAPERBOARD AND A HEAT SEALABLE MULTI-LAYER PAPERBOARD OBTAINABLE BY THE METHOD**
VERFAHREN ZUR HERSTELLUNG EINER HEISSIEGELBAREN MEHRSCHICHTIGEN KARTONAGE UND EINE NACH DIESEM VERFAHREN HERGESTELLTE HEISSIEGELBARE MEHRSCHICHTIGE KARTONAGE
UN PROCEDE DE PRODUCTION D'UN CARTON MULTICOUCHE THERMOSOUDABLE ET UN CARTON MULTICOUCHE THERMOSOUDABLE POUVANT ETRE OBTENU PAR CE PROCEDE

(30) Priority: 23.12.2020 FI 20206367
(43) Date of publication of application: 01.11.2023
(73) Proprietor: CH-Polymers Oy, 02170 Espoo (FI)
(72) Inventor: MIETTINEN, Päivi, 02170 Espoo (FI); AHOKAS, Mia, 02170 Espoo (FI); KEIHOLA, Heidi, 02170 Espoo (FI); HEINONEN, Jaana, 02170 Espoo (FI); LUNDSTEN, Gun, 02170 Espoo (FI)
(74) Representative: Hovinen, Jari Juhani
(86) International application number: PCT/FI2021/050851
(87) International publication number: WO 2022/136728

(56) References cited:
- WO-A1-2014/062476
- US-A1- 2017 211 237

## Description

### FIELD

The present invention relates to methods for producing heat sealable multi-layer paperboard, in particular to methods comprising precoating the paperboard with coating color composition comprising polyvinyl acetate acrylate. The invention relates also to heat sealable multi-layer paperboards obtainable by the method.

### BACKGROUND

Heat is kinetic energy transfer made by the motion of molecules from one medium to another. Energy transfer in hot bar sealing is by conduction, and in hot air sealing by radiation and convection. In hot bar sealing heat is transferred from metal bars and the heat transfer is fastened by simultaneous pressure. In ultrasonic sealing, the tools will remain cold and sealing is generated by internal friction. Heat transfer in hot air sealing is controlled by the motion of molecules separately in each barrier and base substrate layer and their interface and depends on the heat transfer coefficient and heat capacity. To ensure high seal strength, the hot air has to transfer quickly through the whole material, so the use of tacky Water Based Barrier Coatings (WBBCs) and blocking can be avoided.

Thermal diffusivity increases when conductivity increases and specific heat capacity and density decreases. Pristine materials have their specific thermal properties, but things become very different when the materials are mixed together. When mixing water-based binders with mineral fillers, porosity increases with decreasing densities of the WBBC. Air filled pores on the other hand act as insulation and on the other hand interconnected pores allow air and heat to flow through the entire network. Also pore size and distribution will affect heat transfer through WBBC. Increasing latex amount in WBBC will reduce the number of pores creating a more compact structure. Both latex and air have much lower intrinsic thermal conductivity values than mineral fillers, but the reduction in the pore volume (i.e., porosity) is more significant than the increase in the latex volume. In addition, having smaller pores in the coating layer means that the mineral filler particles have a higher chance to be connected, creating a better channel for heat transfer.

Fast heat transfer is essential in hot air sealability of Water Based Barrier coated board substrate. WBBC's are used in disposable materials, such as disposable cups, instead of PE plastic. To achieve as good barrier protection properties with WBBC's as with PE plastic, the barrier film on the top of the board must be even without any pinholes to prevent moisture, water, oil and grease and chemical migration. Converting properties such as hot air sealing is normally made by soft barrier films, which cause the risk for blocking at all production and converting stages. Although higher porosity in barrier coated material is essential for good hot air sealing that cannot be done in top barrier layer without losing of barrier properties.

Different binders such as styrene butadiene (SB), styrene acrylate (SA) and polyvinyl acetate (PVAc), are used in coating pre layer (a.k.a coating color composition) in multilayer barrier solutions under WBBC layers. Main target to use precoating layer is to improve smoothness of base board to ensure even barrier layer for proper barrier properties. However, the precoating may reduce the speed of the heat transfer and thus the multi-layer coated paperboards may not be hot air sealed in reasonable temperatures. A lot of heat energy is used firstly to vaporize tightly tied water molecules, before the barrier coated board starts to warm up. Accordingly, there is still need for WBBC coated paperboards with good heat-sealing properties.

### SUMMARY

The following presents a simplified summary to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In the present invention it was observed that when a paperboard was first precoated with a coating colour composition comprising polyvinyl acetate acrylate latex followed by coating the precoated paperboard with one or more water-based barrier compositions, good heat sealing properties without losing important barrier properties could be obtained.

In accordance with the invention, there is provided a new method for producing a heat sealable multi-layer paperboard, the method comprising:
a) providing a paperboard comprising a first side and a second side,
b) coating at least the first side with a coating colour composition comprising
   ∘ 100 parts of pigments selected from calcium carbonate, titanium dioxide, gypsum, clay, chalk, satin white, barium sulphate, sodium aluminium hydroxide, talc, kaolin, bentonite, and combinations thereof,
   ∘ 10 - 20 parts of one or more binders comprising polyvinyl acetate acrylate latex, wherein the polyvinyl acetate acrylate latex comprises 30-100% by dry weight of the one or more binders,
   ∘ 0-5 parts of polyvinyl alcohol,
   ∘ 0-5 parts of one or more additives selected from a group consisting of preservatives, dispersing agents, defoaming agents, thickeners, lubricants, hardeners, pH modifiers and optical brighteners,
   o water,
c) drying the coating colour composition thereby producing a precoated paperboard,
d) coating at least the precoated first side with a first aqueous polymer dispersion comprising
   ∘ 40-60% by dry weight pigments selected from calcium carbonate, titanium dioxide, gypsum, clay, chalk, satin white, barium sulphate, sodium aluminium hydroxide, talc, kaolin, bentonite, and combinations thereof,
   ∘ 40-60% by dry weight one or more binders comprising synthetic polymers selected from polymer latexes provided that the one or more binders do not comprise polyvinyl acetate acrylate latex,
   ∘ 0-5 % by dry weight polyvinyl alcohol,
   ∘ 0-5% by dry weight one or more additives selected from a group consisting of preservatives, dispersing agents, defoaming agents, thickeners, lubricants, hardeners, pH modifiers and optical brighteners,
e) drying the first aqueous polymer dispersion thereby producing the multi-layer paperboard.

In accordance with the invention, there is also provided a heat sealable multi-layer paperboard obtainable by a method according to any one of claims 1-11.

In accordance with the invention, there is also provided a new use of polyvinyl acetate acrylate latex in coating colour composition for improving heat sealability of a multi-layer paperboard.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that dependent claims are mutually freely combinable unless otherwise explicitly stated. Furthermore, it is to be understood that the use of "a" or "an", i.e., a singular form, throughout this document does not exclude a plurality.

### BRIEF DESCRIPTION OF FIGURES

Figure 1 illustrates an exemplary paperboard (100) which first side (101a) comprises a precoating layer (102) and two water-based barrier layers (103,104) and which second side (101b) comprises one water-based barrier layer (105).
Figure 2 shows seal strength as a function of sealing temperature (first side - second side) light triangle: precoating composition comprises SB + VAcA, calendared; dark triangle: VAcA; square: SB, light circle: SA; black circle: no precoat.
Figure 3 shows seal strength as a function of sealing temperature (first side - first side) dark triangle: VAcA; square: SB, light circle: SA; black circle: no precoat.

### DESCRIPTION

The specific examples provided in the description below should not be construed as limiting the scope and/or the applicability of the accompanied claims. Lists and groups of examples provided in the description are not exhaustive unless otherwise explicitly stated.

According to one embodiment the precent invention concerns a method for producing a heat sealable paperboard, the method comprising
a) providing a paperboard comprising a first side and a second side,
b) coating the first side with a coating colour composition comprising
   ∘ 100 parts of pigments,
   ∘ 10 - 20 parts of one or more binders comprising polyvinyl acetate acrylate latex, wherein the polyvinyl acetate acrylate latex comprises 30-100% by dry weight of the one or more binders,
   ∘ 0-5 parts of polyvinyl alcohol,
   ∘ 0-5 parts of one or more additives selected from a group consisting of preservatives, dispersing agents, defoaming agents, thickeners, lubricants, hardeners, pH modifiers and optical brighteners,
   o water,
c) drying the composition thereby producing a precoated paperboard,
d) coating at least the precoated first side with a first aqueous polymer dispersion comprising
   ∘ 40-60% by dry weight pigments,
   ∘ 40-60% by dry weight one or more binders provided that the one or more binders do not comprise polyvinyl acetate acrylate latex,
   ∘ 0-5% by dry weight polyvinyl alcohol,
   ∘ 0-5% by dry weight one or more additives selected from a group consisting of preservatives, dispersing agents, defoaming agents, thickeners, lubricants, hardeners, pH modifiers and optical brighteners,
e) drying the first aqueous polymer dispersion thereby producing the multi-layer paperboard.

According to a preferable embodiment the method further comprises
f) coating the first side of the multilayer paperboard with a second aqueous polymer dispersion comprising
   ∘ 40-60% by dry weight pigments,
   ∘ 40-60% by dry weight one or more binders provided that the one or more binders do not comprise polyvinyl acetate acrylate latex and that the binder composition differs from binder composition of the first aqueous polymer dispersion,
   ∘ 0-5% by dry weight polyvinyl alcohol,
   ∘ 0-5% by dry weight one or more additives selected from a group consisting of preservatives, dispersing agents, defoaming agents, thickeners, lubricants, hardeners, pH modifiers and optical brighteners, and
g) drying the second aqueous dispersion.

The polyvinyl acetate acrylate is preferably polyvinyl acetate butyl acrylate. The one of more binders of the coating colour composition may comprise further synthetic polymers preferably selected from styrene butadiene latex, styrene acrylate latex, ethylene vinyl acetate latex, and vinyl acetate latex, preferably styrene butadiene latex and styrene acrylate latex, most preferably styrene butadiene latex.

According to one embodiment the coating colour composition aka a precoating composition comprises styrene butadiene latex and polyvinyl acetate acrylate latex. According to this embodiment the polyvinyl acetate acrylate (VAcA) : styrene butadiene (SB) ratio is typically 1:1 by weight.

According to another embodiment the coating colour composition comprises styrene acrylate (SA) and polyvinyl acetate acrylate. According to this embodiment the VAcA : SA ratio is typically 1:1 by weight.

The coating colour composition comprises typically 1-100 parts per hundred (pph) VAcA latex. An exemplary coating colour composition comprises 100 (pph) pigments, 10 pph SB latex, 10 pph VAcA latex, 0.6 pph polyvinyl alcohol (PVA), and preferably also thickener and base such as NaOH. Exemplary amount of thickener and NaOH in the coating colour composition is 0.2 pph and 0.1 pph, respectively. Another exemplary coating colour composition comprises 100 (pph) pigments, 10 pph SA latex, 10 pph VAcA latex, 0.6 pph polyvinyl alcohol (PVA), and preferably also thickener and base such as NaOH. Exemplary amount of thickener and NaOH in the coating colour composition is 0.2 pph and 0.1 pph, respectively. Component amounts are as pph, by weight based on 100 parts of pigments.

The pigments of the coating colour composition are typically selected calcium carbonate, titanium dioxide, gypsum, chalk, satin white, barium sulphate, sodium aluminium hydroxide, talc, kaolin, bentonite, and combinations thereof. The pigments are preferably platy particles. Solid content of the coating colour composition is typically 20-80% by dry weight.

The first aqueous polymer dispersion i.e., the first WBBC composition comprises pigments and one or more binders, provided that the binders do not include polyvinyl acetate acrylate latex. The pigments of the first aqueous polymer dispersion are typically selected from calcium carbonate, titanium dioxide, gypsum, chalk, satin white, barium sulphate, sodium aluminium hydroxide, talc, kaolin, bentonite, and combinations thereof. The pigments are preferably platy particles. Solid content of the first aqueous dispersion is typically 20-80% by dry weight.

The one or more binders of the first aqueous polymer dispersion comprise synthetic polymers preferably selected from polymer latexes. Exemplary polymer latexes are styrene butadiene latex, styrene acrylate latex, ethylene vinyl acetate latex, and vinyl acetate latex. Preferable latex binder is styrene acrylate latex.

The first aqueous polymer dispersion comprises preferably also one or more biopolymers which are preferably selected from starch, proteins, and carboxy methyl cellulose, more preferably starch. The first aqueous may also comprise additives such as dispersion thickeners, lubricants, defoamers, dispersants, surfactants, and pH modifiers.

The second aqueous polymer dispersion i.e., the second WBBC composition comprises pigments and one or more binders, provided that the binders do not include polyvinyl acetate acrylate latex and that the binder composition differs from the binder composition of the first aqueous polymer dispersion. The pigments of the second aqueous dispersion composition are typically selected calcium carbonate, titanium dioxide, gypsum, chalk, satin white, barium sulphate, sodium aluminium hydroxide, talc, kaolin, bentonite, and combinations thereof. The pigments are preferably platy particles. Solid content of the second aqueous dispersion is typically 20-80% by dry weight.

The one or more binders of the second aqueous polymer dispersion comprise synthetic polymers preferably selected from polymer latexes. Exemplary polymer latexes are styrene butadiene latex, styrene acrylate latex, ethylene vinyl acetate latex. Preferable latex binder is styrene acrylate latex. According to a preferable embodiment one or more latexes of the second aqueous polymer dispersion are core shell latexes. An exemplary core shell latex is styrene acrylate core shell latex. When the binders comprise core shell latexes the coating is harder than a coating which polymer latexes do not include core shell.

The second aqueous polymer dispersion comprises preferably also one or more biopolymers which are preferably selected from starch, proteins, and carboxy methyl cellulose, more preferably starch. The second aqueous may also comprise additives such as dispersion thickeners, lubricants, defoamers, dispersants, surfactants, and pH modifiers.

According to a preferable embodiment the first aqueous polymer dispersion does not include core shell latexes and the second aqueous polymer dispersion includes core shell latexes. According to this embodiment the coating obtainable by using the first and the second aqueous polymer dispersion is elastic and hard, respectively.

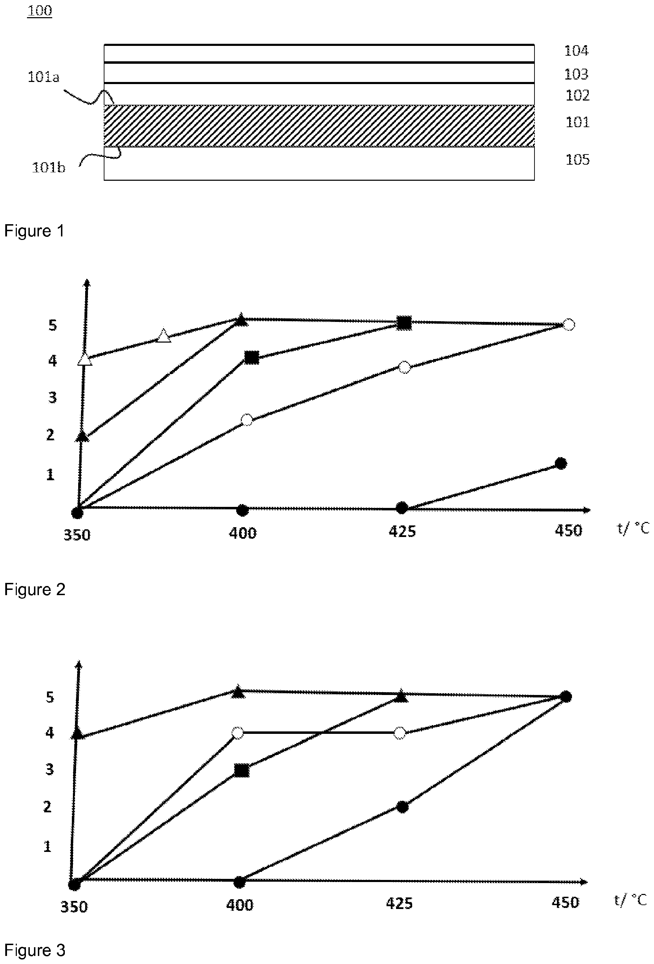

Figure 1 shows an exemplary heat sealable multilayer paperboard 100 obtained by a method of the present invention. The first side 101a is coated with a precoat 102 (3-7 g/m²) followed by an elastic WBBC 103 (3-7g/m²) to reduce cracking. The top layer consists of an anti-blocking WBBC 104 (3-7 g/m²) comprising core shell latex. The second side 101b is coated with an elastic WBBC 105 (3-5 g/m²) to improve sealing properties.

According to another embodiment the present invention concerns use of polyvinyl acetate acrylate latex in coating colour composition for improving heat sealability of a multi-layer paperboard. The coating colour composition comprises preferably
∘ 100 parts of pigments,
∘ 10 - 20 parts of one or more binders comprising the polyvinyl acetate acrylate latex, wherein the polyvinyl acetate acrylate latex comprises 30-100% by dry weight of the one or more binders,
∘ 0-5 parts of polyvinyl alcohol and
∘ 0-5 parts of one or more additives selected from a group consisting of preservatives, dispersing agents, defoaming agents, thickeners, lubricants, hardeners, pH modifiers and optical brighteners.

The one or the more binders comprise preferably synthetic polymers preferably selected from styrene butadiene latex, styrene acrylate latex, ethylene vinyl acetate latex, and vinyl acetate latex, preferably styrene butadiene latex and styrene acrylate latex, most preferably styrene butadiene latex

### EXAMPLES

### Materials and methods

Water Based Barrier Coating (WBBC) compositions, i.e., the first aqueous polymer dispersion and the second aqueous polymer dispersions were prepared using the method disclosed in WO 2016/174309.

The WBBCs prepared consisted 60 parts per hundred dry weight of styrene acrylate latex (soft) or core shell styrene acrylate latex (hard) and 40 parts per hundred dry weight of pigments.

The coating color compositions (precoating) were prepared by mixing a pigment slurry with binder latexes. Pigment-binder ratios are shown in table 4.

The precoating compositions and water-based barrier compositions were applied on a paperboard and dried.

Hot air and hot bar heat sealability of barrier dispersion coated boards were tested with a CAF heat sealing machine. In hot air sealing test, the material was heated under air flow of 200 L/min at a given temperature for 0.5 - 3 seconds. Heated side of the sample was then pressed against an unheated side of the material for one second at pressure of 4 bars. In hot bar sealing tests, the temperature of a lower sealing bar was 45 °C and the temperature of the upper sealing bar was adjusted. Samples were placed between the bars coating against coating and bars were clamped for 1 second with a pressure of 4 bars. After cooling formed seals were torn open by hands and sealability was evaluated visually using following scale: 0 = no seal, 1 = weak adhesion, 2 = adhered but no fibre tear, 3 = under 50 % fibre tear, 4 = over 50 % fibre tear and 5 = 100% fibre tear.

### Study of the effect of precoating on the hot sealing temperature.

### Effect of materials holding water

The role of energy transfer in multilayer WBBC board in hot air sealing was tested by preventing the movement of molecules in top barrier layer. That was done by adding chemicals which hold water molecules tightly in the barrier layer. Chemicals tested were nanocellulose (MFC), Polyvinyl alcohol (PVA) and Carboxy methyl cellulose (CMC). Results are shown in table 1. Clearly the heat transfer speed was reduced, and barriers could not be hot air sealed in reasonable temperatures.

**Table 1.**

| | hot air sealing temperature (°C)^{a} |
|---|---|
| Ref. barrier | 450 |
| 10% MFC | <550 |
| 10% PVA | 525 |
| 10% CMC | 525 |

| | |
|---|---|
| a) Sealing time 0.5 s. | |

The effect of precoating layer structure on hot air sealability was studied. Particles in precoating layer were platy type such as clay or talc, to ensure smoothness and good coverage of barrier top layer. The variables in the study were binder type in precoating layer and pre calandering of precoating layer. Barrier testing methods are described in P. Miettinen et al: The role of base substrate in barrier properties and convertibility of Water Based Barrier Coatings (WBBC) of paper and paperboard. Papercon 2017, April 23-26.2017. Minneapolis, MN, USA*.* Hot air sealability was confirmed in production scale cup machine.

### Precoating experiments

In comparative examples 1 and 2, a paperboard was coated with SB or SA precoat followed by coating with two different WBBC-layers. The second side was coated with a single WBBC-layer. In examples 1-3 the WBBC-layers were as in the comparative examples but the precoating comprised VAcA or a 1:1 mixture of SB and VAcA or SA and VAcA. Structures of the coated paperboards is illustrated in figure 1 and Table 2, and properties of the barrier compositions and precoating formulations are shown in Tables 3 and 4, respectively. Properties of coated paperboards are collected in Table 5.

**Table 2. Structures of barrier coated disposable cup materials.**

| **Layer** | **COMPARATIVE EXAMPLE 1** | **EXAMPLE 1** | **EXAMPLE2** | **EXAMPLE3** | **COMPARATIVE EXAMPLE 2** |
|---|---|---|---|---|---|
| WBBC2 **(104)** | CHP BAR 3630 Anti-blocking | CHP BAR 3630 Anti-blocking | CHP BAR 3630 Anti-blocking | CHP BAR 3630 Anti blocking | CHP BAR 3630 Anti-blocking |
| WBBC1 **(103)** | CHP BAR 3600 elastic | CHP BAR 3600 elastic | CHP BAR 3600 elastic | CHP BAR 3600 elastic | CHP BAR 3600 elastic |
| Precoat **(102)** | SB | SB +VAcA | VAcA | SA + VAcA | SA |
| **(101)** | Base board | Base board | Base board | Base board | Base board |
| WBBC1 **(105)** | CHP BAR 3600 elastic | CHP BAR 3600 elastic | CHP BAR 3600 elastic | CHP BAR 3600 elastic | CHP BAR 3600 elastic |

**Table 3. Properties of the WBBCs used.**

| **WBBC** | | **CHP BAR 3600** | **CHP BAR 3630** |
|---|---|---|---|
| **Solids** | % | 50 | 50 |
| **pH** | | 8,1 | 8,1 |
| **Br100** | mPas | 550 | 600 |
| **Spindle** | no | 4 | 4 |
| **Water retention _{Gradek}** | g/m² | 80 | 100 |

**Table 4. Properties of precoating formulations.**

| **PRECOATING FORMULATION** | | **SB** | **SB + VAcA** | **VAcA** | **SA + VAcA** | **SA** |
|---|---|---|---|---|---|---|
| Pigments (mineral platy fillers) | | 100 | 100 | 100 | 100 | 100 |
| SB latex | | 20 | 10 | | | |
| VAcA latex (CHP 111) | | | 10 | 20 | 10 | |
| SA latex (CHP 204) | | | | | 10 | 20 |
| PVA | | 0,6 | 0,6 | 0,6 | 0,6 | 0,6 |
| Thickener (CHP 713) | | 0,2 | 0,2 | 0,2 | 0,2 | 0,2 |
| NaOH | | 0,1 | 0,1 | 0,1 | 0,1 | 0,1 |
| solids | % | 64.5 | 64.5 | 65 | 65 | 65,2 |
| pH | | 8,2 | 8,2 | 8,2 | 8,4 | 8,8 |
| Br100 | mPas | 700 | 600 | 600 | 580 | 640 |
| Water retention | g/m² | 70 | 67 | 60 | 61 | 65 |

**Table 5. Properties of coated paperboards**

| **Paper analysis** | **SB** | **SB+VAcA** | **SB^{a}** | **SB+VAcA^{a}** | **No precoat** | **VAcA** | **SA+VAc A** | **SA** |
|---|---|---|---|---|---|---|---|---|
| Trial # | 1 | 2 | 3 | 4 | 5 | 6 | 7 | 8 |
| Coat weight, precoat | 12 | 12 | 12 | 12 | 0 | 13 | 12 | 11 |
| Coat weight, barrier 1+2 BS | 5+5 | 5+5 | 5+5 | 5+5 | 5+5 | 5+2 | 5+4 | 4+4 |
| Coat weight print side RS | 4 | 4 | 4 | 4 | 4 | 5 | 4 | 4 |
| Roughness PPS 10 PS, µm | 5,3 | 5,4 | 3,9 | 4,8 | 4,2 | 4,2 | 5 | 4 |
| Cobb 900 gm⁻² | 13 | 12 | 17 | 12 | 17 | 35 | 11 | 29 |
| WVTR-cup 23 °C, RH50% g/m⁻²/d | 35 | 56 | 30 | 54 | 66 | 112 | 110 | 115 |
| Blocking-calendar RH50; 80 °C, 40 bar, 1 nip | | | | | | | | |
| Barrier-barrier | 0-1 | 0-1 | 0-1 | 0 | 1 | 2-3 | 2-3 | 5 |
| Barrier-back side | 0-1 | 0-1 | 2 | 1-2 | 0 | 3 | 2,5 | 3 |
| Air permeance Gurley (s) | 37800 | 30500 | 1530 | 1920 | 2800 | 19000 | 32000 | 35000 |

| | | | | | | | | |
|---|---|---|---|---|---|---|---|---|
| a. Pre-calendared | | | | | | | | |

**Table 6 Hot air sealing experiments.**

| **Trial** | **First side First side** | **Sealing temp °C** | **325** | **350** | **400** | **425** | **450** | **475** |
|---|---|---|---|---|---|---|---|---|
| 1 | | | | | 4 | 5 | 5 | |
| 2 | | | | 0 | 5 | 5 | 5 | |
| 3 | | | | | 3 | 5 | 5 | |
| 4 | | | | 4 | 5 | 5 | 5 | |
| 5 | | | | 0 | 0 | 0 | 1 | |
| 6 | | | | 2 | 5 | | | |
| 7 | | | | 0 | 4 | 5 | | |
| 8 | | | | | 2 | 3 | 5 | |
| | **First side Second side** | | | | | | | |
| 1 | | | | | 3 | 5 | 5 | |
| 2 | | | | 1-3 | 5 | 5 | 5 | |
| 3 | | | | | 4 | 5 | 5 | |
| 4 | | | 0 | 4 | 5 | 5 | 5 | |
| 5 | | | 0 | | | | | |
| 6 | | | 2 | 4,5 | 5 | | | |
| 7 | | | | 2 | 4 | 4 | 5 | |
| 8 | | | 0 | 0 | 2 | 3 | 4 | 5 |

**Table 7. Commercial scale disposable cup trial**

| **Coating** | **PE** | **SB precoat +WBBC** | **SB-VAcA precoat + WBBC** | **No Precoat** |
|---|---|---|---|---|
| Speed cup/min | 30 | 30 | 30 | 30 |
| Air pressure bar | 8 | 4 | 4 | 4 |
| Temperature °C | | | | |
| Pre warming | 230 | 190 | 190 | 190 |
| Seal 1 | 240 | 180 | 180 | 180 |
| Seal 2 | 240 | 180 | 180 | 180 |
| Ultrasonic ms | 3.3 | 1.6 | 1.4 | 2.4 |
| Seal strenght | | | | |
| Sidewall seal | 5 | 5 | 5 | 5 |
| Bottom 1st seal | 5 | 5 | 5 | 5 |
| Bottom, 2nd seal | 3-4 | 3-4 | 5 | 3-4 |
| Coffee test (90 °C, 20 min) | 1.5 h OK, test finished | 20 min OK, 25 min leak | 1.5 h OK, test finished | 20 min ok discoloration inside cup due absorption |

### Discussion

In general, when a barrier is made to be heat-sealed, it is too sticky, and with a board machine, the barrier can either stick to the surface of the machine members at different process stages or different layers on the machine roll can stick to each other. The use of anti-blocking barriers, on the other hand, often prevent seaming.

It was found that an elastic pre-barrier layer prevents the barrier from breaking during cup making. A small layer of elastic barrier is also required on the seconds side od the paperboard to make the cups seal sufficiently. The pre-coating is generally sealed with SB and SA latex and using a sheet-like pigment to provide a uniform and covering layer to the barrier layers. The problem with a too dense pre-coating is poor adhesion of the barrier layers and the barrier layers can peel off the pre-coating. The adhesion of the barrier layers to the precoat can be improved by opening the surface of the precoat. VAcA latex can be used for this purpose. By using this latex, in addition to making the surface of the precoat more open, it can be assumed that the heat transfer will improve throughout the structure. When VAcA latex was used to replace the SB or SA latex usually used, either in part or in whole, it was found that at the same time the hot air sealing temperature could be clearly lowered even if an anti-blocking barrier were used. Water resistance also improved and water vapor resistance slightly deteriorated. In production scale cup tests, the use of VAcA latex in the precoat showed good sealability compared to other latexes. Sealing could also be done at lower temperatures than a PE coated cup. That is, in contrast to the general pre-coating being compacted, the invention negates this and in order to obtain a good cup, VAcA latex (Adhesion, pore structure) must be used. To achieve the effect of VAcA latex, it can be used for 30-100% of the total amount of binder.

The results can be summarized as follows.
✔ Precoating with polyvinyl acetate acrylate binder gave surprisingly good hot air sealing properties (Table 6) without losing important barrier properties compared to SB and SA binder. Water Vapor Transmission Rate is slightly worse (Table 5) with VAcA binder, but it can be optimized by using different amounts of VAcA binder.
✔ VAcA-latex can be used at least 1-100 pph in precoating formulation.
✔ The commercial scale cup tests showed that hot air sealing was at least at the same level as PE coted disposable material. The good sealing results were received with lower sealing temperatures than in case of PE and converters can save also in heating energy.
✔ In the case of VAcA binder, a rough surface of VAcA precoated WBBC product gave same hot air sealing temperatures than without calandering, even though SB precoat was much smoother (PPS 10 value) than VAcA precoat (figures 2 and 3). That indicates that not only heat transfer of different pore structure or pore size distribution of barrier coated cup base but also binder chemistry and adhesion affect hot air sealing.
✔ VAcA binder seems to be optimal binder and excellent hot air sealing and disposable cup forming can be reached also with antiblocking barriers (Table 7).

## Claims

1. A method for producing a heat sealable multi-layer paperboard, the method comprising:
a) providing a paperboard comprising a first side and a second side,
b) coating at least the first side with a coating colour composition comprising
∘ 100 parts of pigments selected from calcium carbonate, titanium dioxide, gypsum, clay, chalk, satin white, barium sulphate, sodium aluminium hydroxide, talc, kaolin, bentonite, and combinations thereof,
∘ 10 - 20 parts of one or more binders comprising polyvinyl acetate acrylate latex, wherein the polyvinyl acetate acrylate latex comprises 30-100% by dry weight of the one or more binders,
∘ 0-5 parts of polyvinyl alcohol,
∘ 0-5 parts of one or more additives selected from a group consisting of preservatives, dispersing agents, defoaming agents, thickeners, lubricants, hardeners, pH modifiers and optical brighteners,
∘ water,
c) drying the composition thereby producing a precoated paperboard,
d) coating at least the precoated first side with a first aqueous polymer dispersion comprising
∘ 40-60% by dry weight pigments selected from calcium carbonate, titanium dioxide, gypsum, clay, chalk, satin white, barium sulphate, sodium aluminium hydroxide, talc, kaolin, bentonite, and combinations thereof,
∘ 40-60% by dry weight one or more binders comprising synthetic polymers selected from polymer latexes provided that the one or more binders do not comprise polyvinyl acetate acrylate latex,
∘ 0-5% by dry weight polyvinyl alcohol,
∘ 0-5% by dry weight one or more additives selected from a group consisting of preservatives, dispersing agents, defoaming agents, lubricants, thickeners, lubricants, hardeners, pH modifiers and optical brighteners,
e) drying the first aqueous polymer dispersion thereby producing the multi-layer paperboard.

2. The method according to claim 1 further comprising
f) coating the first side of the multilayer paperboard with a second aqueous polymer dispersion comprising
∘ 40-60% by dry weight pigments selected from calcium carbonate, titanium dioxide, gypsum, clay, chalk, satin white, barium sulphate, sodium aluminium hydroxide, talc, kaolin, bentonite, and combinations thereof,
∘ 40-60% by dry weight one or more binders comprising synthetic polymers selected from polymer latexes provided that the one or more binders do not comprise polyvinyl acetate acrylate latex and that the binder composition differs from the binder composition of the first aqueous polymer dispersion,
∘ 0-5% by dry weight polyvinyl alcohol,
∘ 0-5% by dry weight one or more additives selected from a group consisting of preservatives, dispersing agents, defoaming agents, thickeners, lubricants, hardeners, pH modifiers and optical brighteners, and
g) drying the second aqueous dispersion.

3. The method according to claim 1 or 2 wherein the polyvinyl acetate acrylate is polyvinyl acetate butyl acrylate latex.

4. The method according to any one of claims 1-3 wherein the one or more binders of the coating colour composition comprise further synthetic polymers preferably selected from styrene butadiene latex, styrene acrylate latex, ethylene vinyl acetate latex, and vinyl acetate latex, preferably styrene butadiene latex and styrene acrylate latex, most preferably styrene butadiene latex.

5. The method according to claim 4 wherein ratio of polyvinyl acetate acrylate latex and styrene butadiene latex in the coating colour composition is 1:1 by weight.

6. The method according to any one of claims 1-5 wherein the coating colour composition comprises 100 pph pigments, 10 pph polyvinyl acetate acrylate latex, 10 pph styrene butadiene latex, and 0.6 pph polyvinyl alcohol.

7. The method according to any one of claims 2-6, wherein the one or more binders of the first and the second aqueous dispersion comprise synthetic polymers selected from styrene butadiene latex, styrene acrylate latex, ethylene vinyl acetate latex, and vinyl acetate latex, preferably styrene acrylate latex.

8. The method according to any one of claims 2-7 wherein the first and/or the second aqueous dispersion comprises one or more biopolymers preferably selected from starch, proteins, and carboxy methyl cellulose, most preferably starch.

9. The method according to any one of claims 2-8 wherein the one or more binders of the second aqueous dispersion comprise one or more core shell latexes.

10. The method according to any one of claims 1-9 comprising calandering the precoated paperboard prior to step d).

11. A heat sealable multi-layer paperboard obtainable by a method according to any one of claims 1-10.

12. Use of polyvinyl acetate acrylate latex in coating colour composition for improving heat sealability of a multi-layer paperboard, .
wherein the coating colour composition comprises
∘ 100 parts of pigments selected from calcium carbonate, titanium dioxide, gypsum, clay, chalk, satin white, barium sulphate, sodium aluminium hydroxide, talc, kaolin, bentonite, and combinations thereof,
∘ 10 - 20 parts of one or more binders comprising the polyvinyl acetate acrylate latex, wherein the polyvinyl acetate acrylate latex comprises 30-100% by dry weight of the one or more binders,
∘ 0-5 parts of polyvinyl alcohol and
∘ 0-5 parts of one or more additives selected from a group consisting of preservatives, dispersing agents, defoaming agents, lubricants, lubricants, hardeners, pH modifiers and optical brighteners.

13. The use according to claim 12 wherein the one or more binders comprise further synthetic polymers preferably selected from styrene butadiene latex, styrene acrylate latex, ethylene vinyl acetate latex, and vinyl acetate latex, preferably styrene acrylate, preferably styrene butadiene latex and styrene acrylate latex, most preferably styrene butadiene latex.

## Patentansprüche

1. Verfahren zur Herstellung einer heißsiegelbaren mehrschichtigen Kartonage, wobei das Verfahren Folgendes umfasst:
a) Bereitstellen einer Kartonage, die eine erste Seite und eine zweite Seite umfasst,
b) Beschichten, mindestens der ersten Seite, mit einer Beschichtungsfarbezusammensetzung umfassend
∘ 100 Teile Pigmente ausgewählt unter Calciumcarbonat, Titandioxid, Gips, Ton, Kreide, Satinweiß, Bariumsulfat, Natriumaluminiumhydroxid, Talkum, Kaolin, Bentonit und Kombinationen davon,
∘ 10 - 20 Teile eines oder mehrerer Bindemittel umfassend Polyvinylacetatacrylat-Latex, wobei der Polyvinylacetatacrylat-Latex 30-100 %, auf das Trockengewicht bezogen, des einen oder der mehreren Bindemittel umfasst,
∘ 0-5 Teile Polyvinylalkohol,
∘ 0-5 Teile eines oder mehrerer Zusatzmittel ausgewählt aus einer Gruppe bestehend aus Konservierungsmitteln, Dispergiermitteln, Entschäumungsmitteln, Verdickungsmitteln, Gleitmitteln, Härtemitteln, pH-Wert-Modifiziermitteln und optischen Aufhellern,
∘ Wasser,
c) Trocknen der Zusammensetzung, wodurch eine vorbeschichtete Kartonagen hergestellt wird,
d) Beschichten, mindestens der vorbeschichteten ersten Seite, mit einer ersten wässrigen Polymerdispersion umfassend
∘ 40-60 %, auf das Trockengewicht bezogen, Pigmente ausgewählt unter Calciumcarbonat, Titandioxid, Gips, Ton, Kreide, Satinweiß, Bariumsulfat, Natriumaluminiumhydroxid, Talkum, Kaolin, Bentonit und Kombinationen davon,
∘ 40-60 %, auf das Trockengewicht bezogen, eines oder mehrerer Bindemittel umfassend synthetische Polymere ausgewählt unter Polymerlatizes, vorausgesetzt, dass ein oder mehrere Bindemittel keinen Polyvinylacetatacrylat-Latex umfassen,
∘ 0-5 %, auf das Trockengewicht bezogen, Polyvinylalkohol,
∘ 0-5 %, auf das Trockengewicht bezogen, eines oder mehrerer Zusatzmittel ausgewählt aus einer Gruppe bestehend aus Konservierungsmitteln, Dispergiermitteln, Entschäumungsmitteln, Gleitmitteln, Verdickungsmitteln, Härtemitteln, pH-Wert-Modifiziermitteln und optischen Aufhellern,
e) Trocknen der ersten wässrigen Polymerdispersion, wodurch die mehrschichtige Kartonagen hergestellt wird.

2. Verfahren nach Anspruch 1, ferner Folgendes umfassend
f) Beschichten der ersten Seite der mehrschichtigen Kartonage mit einer zweiten wässrigen Polymerdispersion umfassend
∘ 40-60 %, auf das Trockengewicht bezogen, Pigmente ausgewählt unter Calciumcarbonat, Titandioxid, Gips, Ton, Kreide, Satinweiß, Bariumsulfat, Natriumaluminiumhydroxid, Talkum, Kaolin, Bentonit und Kombinationen davon,
∘ 40-60 %, auf das Trockengewicht bezogen, eines oder mehrerer Bindemittel umfassend synthetische Polymere ausgewählt unter Polymerlatizes, vorausgesetzt, dass das eine oder die mehreren Bindemittel keinen Polyvinylacetatacrylat-Latex umfassen und dass die Bindemittelzusammensetzung von der Bindemittelzusammensetzung der ersten wässrigen Polymerdispersion verschieden ist,
∘ 0-5 %, auf das Trockengewicht bezogen, Polyvinylalkohol,
∘ 0-5 %, auf das Trockengewicht bezogen, eines oder mehrerer Zusatzmittel ausgewählt aus der Gruppe bestehend aus Konservierungsmitteln, Dispergiermitteln, Entschäumungsmitteln, Verdickungsmitteln, Gleitmitteln, Härtemitteln, pH-Wert-Modifiziermitteln und optischen Aufhellern und
g) Trocknen der zweiten wässrigen Polymerdispersion.

3. Verfahren nach Anspruch 1 oder 2, wobei das Polyvinylacetatacrylat Polyvinylacetatbutylacrylat-Latex ist.

4. Verfahren nach einem der Ansprüche 1-3, wobei das eine oder die mehreren Bindemittel der Beschichtungsfarbezusammensetzung ferner synthetische Polymere umfasst, die bevorzugt ausgewählt sind unter Styrolbutadien-Latex, Styrolacrylat-Latex, Ethylenvinylacetat-Latex und Vinylacetat-Latex, bevorzugt Styrolbutadien-Latex und Styrolacrylat-Latex, am bevorzugtesten Styrolbutadien-Latex.

5. Verfahren nach Anspruch 4, wobei das Verhältnis von Polyvinylacetatacrylat-Latex und Styrolbutadien-Latex in der Beschichtungsfarbezusammensetzung 1:1, auf das Gewicht bezogen, beträgt.

6. Verfahren nach einem der Ansprüche 1-5, wobei die Beschichtungsfarbezusammensetzung 100 pph Pigmente, 10 pph Polyvinylacetatacrylat-Latex, 10 pph Styrolbutadien-Latex und 0,6 pph Polyvinylalcohol umfasst.

7. Verfahren nach einem der Ansprüche 2-6, wobei das eine oder die mehreren Bindemittel der ersten und der zweiten wässrigen Dispersion synthetische Polymere umfassen ausgewählt unter Styrolbutadien-Latex, Styrolacrylat-Latex, Ethylenvinylacetat-Latex und Vinylacetat-Latex, bevorzugt Styrolacrylat-Latex.

8. Verfahren nach einem der Ansprüche 2-7, wobei die erste und/oder die zweite wässrigen Dispersion ein oder mehrere Biopolymere umfasst, die bevorzugt unter Stärke, Proteinen und Carboxymethylcellulose, am bevorzugtesten Stärke, ausgewählt sind.

9. Verfahren nach einem der Ansprüche 2-8, wobei das eine oder die mehreren Bindemittel der zweiten wässrigen Dispersion ein oder mehrere Kern-Mantel-Latizes umfassen.

10. Verfahren nach einem der Ansprüche 1-9, umfassend Kalandrieren der vorbeschichteten Kartonagen vor Schritt d).

11. Heißsiegelbare mehrschichtige Kartonage, die durch ein Verfahren nach einem der Ansprüche 1-10 erhältlich ist.

12. Verwendung von Polyvinylacetatacrylat-Latex in einer Beschichtungsfarbezusammensetzung zum Verbessern der Heißsiegelbarkeit einer mehrschichtigen Kartonage, wobei die Beschichtungsfarbezusammensetzung Folgendes umfasst
∘ 100 Teile Pigmente ausgewählt unter Calciumcarbonat, Titandioxid, Gips, Ton, Kreide, Satinweiß, Bariumsulfat, Natriumaluminiumhydroxid, Talkum, Kaolin, Bentonit und Kombinationen davon,
∘ 10 - 20 Teile eines oder mehrerer Bindemittel umfassend den Polyvinylacetatacrylat-Latex, wobei der Polyvinylacetatacrylat-Latex 30-100 %, auf das Trockengewicht bezogen, des einen oder der mehreren Bindemittel umfasst,
∘ 0-5 Teile Polyvinylalkohol und
∘ 0-5 Teile eines oder mehrerer Zusatzmittel ausgewählt aus einer Gruppe bestehend aus Konservierungsmitteln, Dispergiermitteln, Entschäumungsmitteln, Gleitmitteln, Härtemitteln, pH-Wert-Modifiziermitteln und optischen Aufhellern.

13. Verwendung nach Anspruch 12, wobei das eine oder die mehreren Bindemittel ferner synthetische Polymere umfassen, die bevorzugt ausgewählt sind unter Styrolbutadien-Latex, Styrolacrylat-Latex, Ethylenvinylacetat-Latex und Vinylacetat-Latex, bevorzugt Styrolacrylat, bevorzugt Styrolbutadien-Latex und Styrolacrylat-Latex, am bevorzugtesten Styrolbutadien-Latex.

## Revendications

1. Procédé de fabrication d'un carton multicouche thermoscellable, le procédé comprenant :
a) la fourniture d'un carton comprenant une première face et une deuxième face,
b) le revêtement d'au moins la première face à l'aide d'une composition de couleur de revêtement comprenant
- 100 parties de pigments choisis parmi le carbonate de calcium, le dioxyde de titane, le gypse, l'argile, la craie, le blanc satiné, le sulfate de baryum, l'hydroxyde de sodium et d'aluminium, le talc, le kaolin, la bentonite et leurs combinaisons,
- de 10 à 20 parties d'un ou de plusieurs liants comprenant du latex d'acrylate et d'acétate de polyvinyle, le latex d'acrylate et d'acétate de polyvinyle représentant entre 30 et 100 % en poids sec du ou des liants,
- de 0 à 5 parties d'alcool polyvinylique,
- de 0 à 5 parties d'un ou de plusieurs additifs choisis dans un groupe constitué par les conservateurs, les agents dispersants, les agents anti-mousse, les épaississants, les lubrifiants, les durcisseurs, les modificateurs de pH et les azurants optiques,
- de l'eau,
c) le séchage de la composition, produisant ainsi un carton pré-couché,
d) le revêtement d'au moins la première face pré-couchée avec une première dispersion aqueuse de polymères comprenant
- de 40 à 60 % en poids sec de pigments choisis parmi le carbonate de calcium, le dioxyde de titane, le gypse, l'argile, la craie, le blanc satiné, le sulfate de baryum, l'hydroxyde de sodium et d'aluminium, le talc, le kaolin, la bentonite et des combinaisons de ces éléments,
- de 40 à 60 % en poids sec d'un ou de plusieurs liants comprenant des polymères synthétiques choisis parmi les latex de polymères, à condition que le ou les liants ne comprennent pas de latex d'acrylate d'acétate de polyvinyle,
- de 0 à 5 % en poids sec d'alcool polyvinylique,
- de 0 à 5 % en poids sec d'un ou de plusieurs additifs choisis dans un groupe constitué par les conservateurs, les agents dispersants, les agents anti-mousse, les lubrifiants, les épaississants, les lubrifiants, les durcisseurs, les modificateurs de pH et les azurants optiques,
e) le séchage de la première dispersion aqueuse de polymère, produisant ainsi le carton multicouche.

2. Procédé selon la revendication 1 comprenant en outre
f) le revêtement de la première face du carton multicouche avec une deuxième dispersion aqueuse de polymères comprenant
- de 40 à 60 % en poids sec de pigments choisis parmi le carbonate de calcium, le dioxyde de titane, le gypse, l'argile, la craie, le blanc satiné, le sulfate de baryum, l'hydroxyde de sodium et d'aluminium, le talc, le kaolin, la bentonite et des combinaisons de ceux-ci,
- de 40 à 60 % en poids sec d'un ou de plusieurs liants comprenant des polymères synthétiques choisis parmi les latex de polymères, à condition que le ou les liants ne comprennent pas de latex d'acrylate et d'acétate de polyvinyle et que la composition du liant diffère de la composition du liant de la première dispersion aqueuse de polymères,
- de 0 à 5 % en poids sec d'alcool polyvinylique,
- de 0 à 5 % en poids sec d'un ou de plusieurs additifs choisis dans un groupe constitué par les conservateurs, les agents dispersants, les agents anti-mousse, les épaississants, les lubrifiants, les durcisseurs, les modificateurs de pH et les azurants optiques, et
g) le séchage de la deuxième dispersion aqueuse.

3. Procédé selon la revendication 1 ou la revendication 2, dans lequel l'acrylate d'acétate de polyvinyle est le latex d'acétate de polyvinyle et d'acrylate de butyle.

4. Procédé selon l'une quelconque des revendications 1 à 3 dans lequel le ou les liants de la composition colorée de revêtement comprennent d'autres polymères synthétiques choisis de préférence parmi le latex de styrène et de butadiène, le latex de styrène et d'acrylate, le latex d'éthylène et d'acétate de vinyle et le latex d'acétate de vinyle, de préférence le latex de styrène et de butadiène et le latex de styrène et d'acrylate, de préférence le latex de styrène et de butadiène.

5. Procédé selon la revendication 4, dans lequel le rapport entre le latex d'acrylate d'acétate de polyvinyle et le latex de styrène et de butadiène dans la composition de la couleur de revêtement est de 1:1 en poids.

6. Procédé selon l'une quelconque des revendications 1 à 5 dans lequel la composition colorée de revêtement comprend 100 pph de pigments, 10 pph de latex d'acrylate et d'acétate de polyvinyle, 10 pph de latex de styrène et de butadiène, et 0,6 pph d'alcool polyvinylique.

7. Procédé selon l'une quelconque des revendications 2 à 6, dans lequel le ou les liants de la première et de la deuxième dispersion aqueuse comprennent des polymères synthétiques choisis parmi le latex de styrène et de butadiène, le latex d'acrylate de styrène, le latex d'éthylène et d'acétate de vinyle, et le latex d'acétate de vinyle, de préférence le latex de styrène.

8. Procédé selon l'une quelconque des revendications 2 à 7 dans lequel la première et/ou la deuxième dispersion aqueuse comprend un ou plusieurs biopolymères choisis de préférence parmi l'amidon, les protéines et la carboxy méthyl cellulose, de préférence l'amidon.

9. Procédé selon l'une quelconque des revendications 2 à 8, dans lequel le ou les liants de la deuxième dispersion aqueuse comprennent un ou plusieurs latex à cœur d'enveloppe.

10. Procédé selon l'une quelconque des revendications 1 à 9, comprenant le calandrage du carton pré-couché avant l'étape d).

11. Carton multicouche thermoscellable obtenu par un procédé selon l'une quelconque des revendications 1 à 10.

12. Utilisation de latex d'acrylate et d'acétate de polyvinyle dans une composition colorée de couchage pour améliorer la scellabilité thermique d'un carton multicouche,
dans laquelle la composition de couleur de revêtement comprend
- 100 parties de pigments choisis parmi le carbonate de calcium, le dioxyde de titane, le gypse, l'argile, la craie, le blanc satiné, le sulfate de baryum, l'hydroxyde de sodium et d'aluminium, le talc, le kaolin, la bentonite et des combinaisons de ceux-ci,
- de 10 à 20 parties d'un ou de plusieurs liants comprenant le latex d'acrylate et d'acétate de polyvinyle, le latex d'acrylate et d'acétate de polyvinyle représentant de 30 à 100 % en poids sec du ou des liants,
- de 0 à 5 parties d'alcool polyvinylique et
- de 0 à 5 parties d'un ou plusieurs additifs choisis dans un groupe constitué par les conservateurs, les agents dispersants, les agents anti-mousse, les lubrifiants, les durcisseurs, les modificateurs de pH et les azurants optiques.

13. Utilisation selon la revendication 12, dans laquelle le ou les liants comprennent d'autres polymères synthétiques choisis de préférence parmi le latex de styrène et de butadiène, le latex d'acrylate de styrène, le latex d'éthylène et d'acétate de vinyle, et le latex d'acétate de vinyle, de préférence l'acrylate de styrène, de préférence le latex de styrène et de butadiène et le latex d'acrylate de styrène, de préférence encore le latex de styrène et de butadiène.
